# EUROPÄISCHE PATENTSCHRIFT

(11) **EP 3 512 657 B1**
(45) Veröffentlichungstag und Bekanntmachung des Hinweises auf die Patenterteilung: **13.05.2020**
(21) Anmeldenummer: 18712553.9
(22) Anmeldetag: 16.03.2018
(51) Int. Cl.: B23B 27/16

(54) **WERKZEUGSYSTEM**
TOOL SYSTEM
SYSTÈME D'OUTIL

(30) Priorität: 22.03.2017 DE 102017204825; 24.03.2017 DE 102017205029; 30.08.2017 DE 102017215156; 11.09.2017 DE 102017215972
(43) Veröffentlichungstag der Anmeldung: 24.07.2019
(73) Patentinhaber: CeramTec GmbH, 73207 Plochingen (DE)
(72) Erfinder: HENZLER, Uwe, 73269 Hochdorf (DE)
(86) Internationale Anmeldenummer: PCT/EP2018/056709
(87) Internationale Veröffentlichungsnummer: WO 2018/172218

(56) Entgegenhaltungen:
- EP-A2- 1 595 648
- WO-A1-03/013770
- WO-A1-2016/110596
- DE-A1-102010 029 616
- US-A1- 2003 086 766

## Beschreibung

Die Erfindung betrifft ein Werkzeugsystem mit einer Schneidplatte und mit einem Werkzeughalter, der einen Plattensitz zur Aufnahme der Schneidplatte mit einer Mulde und entfernt von diesem Plattensitz eine zur an den Plattensitz angrenzende Oberfläche des Werkzeughalters in einem stumpfen Winkel geneigte Fläche aufweist, mit einem Spannelement, das eine Öffnung mit einem Anschlag, in der eine Spannschraube mit einem Führungsabschnitt aufgenommen ist, eine Fläche und einen Vorsprung aufweist, wobei die Nase des Spannelements eine Ringfläche und die Mulde der Schneidplatte eine Ringfläche aufweist, wobei im gespannten Zustand der Schneidplatte die Ringfläche des Spannelements und die Ringfläche der Schneidplatte aneinander formschlüssig anliegen und beim Befestigungsvorgang des Spannelements an dem Werkzeughalter, d.h. beim Erzeugen eines Drehmoments, beim Drehen der Spannschraube die Fläche des Spannelements auf der Fläche des Werkzeughalters gleitet wodurch sich das Spannelement relativ zu dem Werkzeughalter bewegt und die Schneidplatte in den Plattensitz zieht und spannt.

Beim Spannen einer Schneidplatte in einem Werkzeughalter ist es erforderlich, dass mehrere Anforderungen erfüllt werden. So ist es für die Bearbeitung von Werkstücken erforderlich, dass die Schneidplatte präzise, in einem Werkzeughalter ortsfest gehalten wird. Dabei sollte der Aufnahmeraum, der Plattensitz der Schneidplatte, so ausgebildet sein, dass im Verschleißfalle die Schneidplatte ohne großen Zusatzaufwand exakt an dieselbe Stelle der zu ersetzenden Schneidplatte positioniert werden kann. Die Wiederholbarkeit der Schneidplattenposition stellt ein unabdingbares Erfordernis an einen Plattensitz eines Werkzeughalters dar. Des Weiteren ist es erforderlich, dass der eigentliche Spannprozess der Schneidplatte, dass Festspannen der Schneidplatte im Werkzeughalter, so einfach wie möglich gestaltet ist, denn in der Fertigung sind Situationen möglich, in denen die Zugänglichkeit eine Schneidplatte erschwert ist. Dies kann dann der Fall sein, wenn mehrere Werkzeughalter auf einem Werkzeugträger angeordnet sind und an einem der Werkzeughalter eine Schneidplatte ausgewechselt werden muss. Möglicherweise kann es erforderlich sein, eine Schneidplatte "über Kopf" auszutauschen.

Im Stand der Technik sind verschieden Anordnungs- und Befestigungsmöglichkeiten einer Schneidplatte offenbart. So ist es beispielsweise bekannt, eine Schneidplatte, die eine Mulde aufweist, in die ein Gegenstück einer Spannpratze eingreift, zu spannen. Das Gegenstück kann einstückig mit der Spannpratze oder an einer Druckplatte, die wiederum mit der Spannpratze zusammenwirkt, angeordnet sein.

Es ist auch bekannt, eine Schneidplatte ohne Mulde, über deren ebene Oberfläche zu spannen. Die Spannpratze oder ein entsprechendes Druckstück weist dann auch eine eben ausgebildete Spannfläche auf.

Es sind auch Kombinationen der vorbeschriebenen Spannmethoden offenbart. So wird im Stand der Technik die Befestigung einer Schneidplatte über eine Mulde und zugleich über die Oberfläche der Schneidplatte beschrieben.

In der WO 2003/013770 wird eine Schneidplatte offenbart, die eine Spannmulde in Form eines "Donuts" aufweist. Ein kreisförmiger Ring eines Druckstücks greift in die Spannmulde ein. Das Druckstück weist an seiner der Schneidplatte gegenüberliegender Seite Formmittel auf, die mit entsprechenden Formmitteln der Spannpratze zusammenwirken. Beim Festziehen einer Spannschraube wird über eine Schräge an der Spannpratze und dem Trägerwerkzeug in Verbindung mit den Formmitteln des Druckstücks und der Spannpratze sowie dem kreisförmigen Ring des Druckstücks ein Spannen der Schneidplatte im Trägerwerkzeug sichergestellt. Dabei entsteht ein punkt- bzw. linienförmiger Kontakt zwischen dem kreisförmigen Ring des Druckstücks und der Spannmulde in der Schneidplatte. Die Kräfteeinwirkungen über diesen punkt- bzw. linienförmigen Kontakt auf die Schneidlatte können so enorm sein, dass diese bricht. Dies kann insbesondere bei sehr spröden keramischen Werkstoffen der Fall sein.

Aus der WO 2007080151 A1 ist ein spanabhebendes Werkzeugsystem bekannt, welches im Wesentlichen aus einem Trägerwerkzeug besteht, welches eine Ausnehmung zur Aufnahme einer Schneidplatte aufweist. Die Schneidplatte ist mit einer Spannmulde versehen. Die Schneidplatte wird von einem Spannelement im Trägerwerkzeug gehalten. Das Spannelement ist wiederum über eine Spannschraube auf dem Trägerwerkzeug befestigt. An der zur Schneidplatte gewandten Unterseite des Spannelements ist ein Eingreifelement angeordnet, das mit der Spannmulde in spannender Berührung steht und die Schneidplatte dadurch auf dem Trägerwerkzeug verankert. Das Spannelement ist über eine Schräge auf dem Trägerwerkzeug geführt, so dass beim Anziehen der Spannschraube das Spannelement hin zum Trägerwerkzeug gezogen wird.

Die WO 2013/060752 offenbart ein Werkzeugsystem geeignet für hohe Schnittdaten und Vorschubgeschwindigkeiten, wobei das Spannelement in einer Nut mit parallelen Spannelementführungen beweglich gehalten ist und im Spannelement eine Spannelementbohrung für die Spannschraube angeordnet ist und im eingespannten Zustand der Schneidplatte, die zur Schneidplatte gewandte Wandung der Spannelementbohrung an der Spannschraube anliegt und das Eingreifelement des Spannelements, von der Schneidkante der Schneidplatte aus gesehen, vor der Mitte der Spannmulde in diese formschlüssig eingreift.

Die gattungsbildende WO 2016/110596 A1 beschreibt ein Werkzeugsystem mit allen Merkmalen des Oberbegriffs des Anspruch 1.

DE 10 2010 029616 A1 beschreibt ein form- und kraftschlüssiges Schneidplatten-Klemmsystem mit einer Verdrehsicherung.

EP 1 595 648 A2 beschreibt ein zweigeteiltes Spannelement.

Der Erfindung liegt die Aufgabe zugrunde, ein Werkzeugsystem nach dem Oberbegriff des Anspruchs 1 so zu verbessern, dass ein positionsgenaues, sicheres, wiederholbares Spannen einer Schneidplatte möglich ist und eine Beschädigung der Schneidplatte verhindert ist.

Erfindungsgemäß wird diese Aufgabe durch die Merkmale des Anspruchs 1 gelöst.

Die Erfindung betrifft ein Werkzeugsystem umfassend ein Werkzeughalter mit einem Spannelement mit einer Spannelementnase und mit einer Schneidplatte mit einer Mulde auf der Schneidplattenoberfläche, zur spanenden Bearbeitung von Werkstücken. Die Mulde weist einen Muldenboden auf, der über eine Ringfläche in die Oberseite der Schneidplatte übergeht. In einer speziellen Ausführungsform kann in der Mulde eine Erhebung angeordnet sein, deren Spitze mit Abstand zur Schneidplattenoberfläche endet. Eine Nase bzw. ein Vorsatz eines Spannelements bzw. einer am Spannelement angeordneten Druckplatte greift im gespannten Zustand in die Mulde der Schneidplatte ein und spannt diese dadurch auf dem Trägerwerkzeug bzw. dem Halteelement.

Der erfindungsgemäße Spannmechanismus weist ein außerhalb der Mitte des Spannelements angeordnetes Spannmittel auf. Eine an einem Ende des Spannelements in einem Winkel angeordnete Gleitfläche steht während des Spannvorgangs in Wirkverbindung mit einer im Winkel angeordneten Fläche des Werkzeughalters. Dadurch bewegt sich das Spannelement relativ zum im Werkzeugsystem ortsfest angeordneten Werkzeughalter und spannt die Schneidplatte wiederholbar, positionsgetreu im Plattensitz des Werkzeughalters. Die horizontale Relativbewegung des Spannelements wird dadurch begrenzt, dass ein Führungsabschnitt des Spannmittels an einem Anschlag, einer Wand des Spannelements zur Anlage kommt. Erfindungsgemäß wird der Abstand zwischen dem Anschlag und der Mitte der Mulde der Schneidplatte bzw. der Nase des Spannelements so festgelegt, dass bei maximal erlaubtem Drehmoment ein vollständig flächiger Formschluss zwischen Nase des Spannelements und Mulde der Schneidplatte entsteht. Um dies zu gewährleisten, weist sowohl die Nase des Spannelements, wie auch die Mulde eine Ringfläche auf. Im gespannten Zustand des Werkzeugsystems stehen beide Ringflächen in Wirkverbindung.

Das Spannmittel ist außerhalb der Mitte des Spannelements angeordnet. Vorzugsweise ist das Spannelement im Abstand von 30% der Hälfte der Spannelementlänge versetzt zur Mitte angeordnet. Besonders vorzugsweise ist das Spannmittel in Richtung der Gleitfläche versetzt angeordnet.

Aufgrund der erfindungsgemäßen Anordnung der Ringflächen, der Gleitflächen und des Spannmittels wird ein flächenhafter Kontaktbereich der Ringflächen erzeugt. Dieser Kontaktbereich erstreckt sich komplett über die gesamten Ringflächen, sodass in einem Bereich von 360 Grad ein Krafteintrag in die Schneidplatte entsteht.

**Bezugszeichenliste**

| | |
|---|---|
| 1 | Werkzeug system |
| 2 | Werkzeug halter |
| 4 | Spannelement |
| 5 | Vorsatz, Vorsprung, Nase von 4 |
| 6 | Schneidplatte |
| 7 | Mulde von 6 |
| 10 | Oberseite von 6 |
| 11 | Unterseite von 6 |
| 15 | Spannmittel, Schraube |
| 16 | Druckplatte |
| 17 | Plattensitz |
| 18 | erstes Ende von 4 |
| 19 | zweites Ende von 4 |
| 20 | Fläche |
| 21, 21' | Flachseite von 4 |
| 22 | Fläche von 2 |
| 23 | Befestigungsabschnitt von 15 |
| 24 | Spannabschnitt von 15 |
| 25 | Führungsabschnitt von 15 |
| 26 | Öffnung, Bohrung |
| 27 | Anschlag, Wand von 26 |
| 28 | Anlagefläche von 4 |
| 30, 30' | Boden von 7 |
| 31 | Ringfläche 31 von 7 |
| 32 | Öffnung von 7 |
| 33, 34 | schmale Flachseite von 4 |
| 36 | Ringfläche von 5 |
| 38 | Sicherungsmittel |
| 39 | Ausnehmung |
| 40 | Grundkörper von 4 |
| 41 | Aufnahmeraum |
| 42 | Anschlagfläche |
| 43, 43' | Führungsfläche, Innenseite |
| 44, 44' | Nut |
| 45 | Mündung |
| 46 | Feder |
| 47 | Befestigungsmittel |
| 48, 48' | Vorsprung, Finger |
| 49 | Endbereich von 48 |
| 51 | Öffnung in 40 |
| 52 | Endbereich von 48 |
| 53 | Oberfläche von 2 |
| Q1 | Querschnittsfläche von 30 |
| Q2 | Querschnittsfläche von 32 |
| T | Tiefe von 7 |
| H | Höhe von 35 |
| m1 | Durchmesser von 30, 30' |
| m2 | Durchmesser von 32 |
| m3 | Durchmesser von 35 |
| m4 | Durchmesser von 35 |
| A1 | Abstand von 45 |

Nachfolgend wird die Erfindung anhand von Figuren erläutert. Dabei zeigt
- Figur1:: einen Querschnitt des Werkzeugsystems, umfassend ein Werkzeughalter, eine Schneidplatte, ein Spannelement und ein Spannmittel auszugsweise und in schematischer Darstellung,
- Figur 2: den Querschnitt einer Mulde einer Schneidplatte gemäß Figur 1 auszugsweise und in schematischer Darstellung,
- Figur 3: eine Draufsicht von Figur 2 in schematischer Darstellung,
- Figur 4:: den Querschnitt einer alternativen Form einer erfindungsgemäßen Mulde einer Schneidplatte, auszugsweise und in schematischer Darstellung,
- Figur 5:: das Spannelement von unten betrachtet in schematischer Darstellung,
- Figur 6:: das erste Ende eines Spannelements mit Vorsprung, ausschnittsweise und in schematischer Darstellung,
- Figur 7:: die erfindungsgemäße Mulde der Schneidplatte in Draufsicht, auszugsweise und in schematischer Darstellung,
- Figur 8:: die Paarung Mulde mit Vorsprung, ausschnittsweise und in schematischer Darstellung,
- Figur 9:: eine alternative Ausführungsform eines Spannelements mit Druckplatte, ausschnittsweise und in schematischer Darstellung,
- Figur 10:: das Spannelement gemäß Figur 9 von unten betrachtet und
- Figur 11:: eine alternative Ausführung des Spannelements gemäß Figur 9.

Alle Figuren enthalten ausschnittsweise, schematische Darstellungen der Erfindung und werden beispielhaft zur Erläuterung der Erfindung herangezogen. Spezielle Ausführungsformen der Erfindung können von diesen Figuren abweichen.

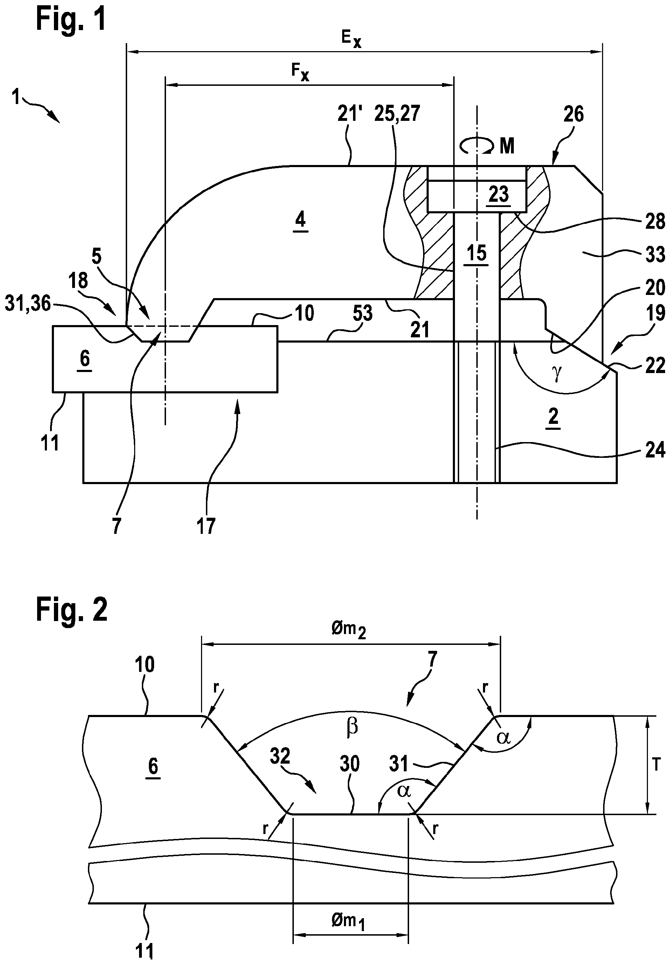

Figur 1 zeigt ein Werkzeugsystem 1, in schematischer Darstellung, umfassend einen Werkzeughalter 2, eine Schneidplatte 6, die eine Mulde 7 aufweist und ein Spannelement 4 mit einer Nase 5, die im gespannten Zustand des Werkzeugsystems 1 in die Mulde 7 der Schneidplatte 6 greift. Das Spannelement 4, welches im Wesentlichen der Form eines Quaders entspricht, mit zwei breiten Flachseiten 21, 21' und zwei schmalen Flachseiten 33, 34, ist mittels eines Spannmittels 15 am Werkzeughalter 2 befestigt. Die Schneidplatte 6, die an ihrer Oberseite 10 eine Mulde 7 aufweist, kann und ist bevorzugt auch als sogenannte Wendeschneidplatte ausgebildet. An einer Wendeschneidplatte 6 ist an der Oberseite 10 und an der Unterseite 11 eine Mulde 7 ausgebildet. Beide Mulden sind identisch, so dass es möglich ist die Schneidplatte 6 um 180 Grad gedreht in dem Plattensitz 17 des Werkzeughalters 2 zu positionieren. Die Nase 5 ist am ersten Ende 18 des quaderförmigen Spannelements 4 angeordnet. Die Form und die Funktionsweise der Nase 5 werden nachfolgend beschrieben. Am zweiten Ende 19 des Spannelements 4 weist dieses eine in einem Winkel angeordnete Fläche 20 auf. Vorzugsweise bildet diese Fläche 20 mit der Oberfläche 53 der Oberseite des Werkzeughalters 2 einen stumpfen Winkel Y im Bereich von 120 bis 170 Grad, besonders vorzugsweise von 145 bis 165 Grad. Die Oberseite 10 der Schneidplatte 6 ist vorzugsweise parallel zur Oberfläche 53 ausgerichtet.

Der Werkzeughalter 2 weist im Bereich der Fläche 20 des Spannelements 4 eine zu der Fläche 20 kongruente Fläche 22 auf. Beide Flächen 20 und 22 bilden eine schiefe Ebene. Der Werkzeughalter 2 ist in der Werkzeugmaschine (nicht dargestellt) ortsfest gehalten. Beim Befestigungsvorgang des Spannelements 4 an dem Werkzeughalter 2, d.h. beim Erzeugen eines Drehmoments, beim Drehen (zudrehen) des Spannmittels 15 gleitet die Fläche 20 des Spannelements 4 auf der Fläche 22 des Werkzeughalters 2 (in der Figur 1 nach rechts und nach unten). Durch diesen Spannmechanismus bewegt sich das Spannelement 4 relativ zu dem Werkzeughalter 2 und zieht und spannt über die Verbindung des Vorsprungs 5 mit der Mulde 7 der Schneidplatte 6 diese in den Plattensitz 17. Die Qualität der Oberflächen der Flächen 20 und 22 sind so gestaltet, dass ein Gleiten dieser Flächen aufeinander unterstützt wird.

Im Ausführungsbeispiel gemäß Figur 1 ist das Spannmittel 15 als Schraube, auch Spannschraube genannt, ausgeführt. Die Schraube 15 weist einen Befestigungsabschnitt 23, in Form eines Kopfes und einen im Wesentlichen zylindrisch ausgebildeten Spann- 24 und Führungsabschnitt 25 auf. Der Spannabschnitt 24 kann als Gewinde, beispielsweise als Außengewinde, ausgebildet sein, welches mit einem Gegenstück im Werkzeughalter 2, beispielsweise einem Innengewinde zusammenwirkt. Der Führungsabschnitt 25 der Schraube 15 kann als Anschlag zur Begrenzung der linearen Beweglichkeit, in Figur 1 der horizontalen Beweglichkeit, des Spannelements 4 dienen. Begrenzt wird diese Beweglichkeit durch das Zusammenwirken des Führungsabschnitts 25 der Schraube 15 mit dem Anschlag, der Wandung 27 der Öffnung 26 des Spannelements 4, durch die die Schraube 15 greift, um das Spannelement 4 am Werkzeughalter 2 zu befestigen. Durch diese Begrenzung wird verhindert, dass beim Spannen durch ein zu hohes Drehmoment M die Schneidplatte 6 beschädigt wird. Zusätzlich wird durch diese Begrenzung verhindert, dass beim Spannen die Ringfläche 36 der Nase 5 des Spannelements 4 aus der Mulde 7 der Schneidplatte 6 herausgleitet. Die Öffnung 26 kann beispielsweise als kreisrunde Bohrung ausgeführt sein. Es sind auch andere Formen dieser Öffnung 26, wie beispielsweise schlitzförmige oder ovale Öffnungen möglich. Alle Formen der Öffnung 26 weisen ein Anschlagmittel 28 und eine Wand 27 auf. Das Anschlagmittel 28 kann in Form einer Anlagefläche ausgebildet sein und wirkt mit dem Befestigungsmittel 23 der Schraube 15 zusammen. Die Wand 27 der Öffnung 26 wirkt mit dem Führungsabschnitt 25 des Spannmittels 15 zusammen. Das zwischen Außengewinde des Spannabschnitts 24 und Innengewinde des Werkzeughalters 2 vorhandene Spiel kann zum Ausgleich von Fertigungstoleranzen verwendet werden. Dieses Spiel ermöglicht vorzugsweise eine Bewegung im Bereich von 0,1 bis 0,2 mm in alle Richtungen.

Figur 1 zeigt einein Querschnitt durch den Spannmechanismus. Gemäß diesem Ausführungsbeispiel erfolgt der Krafteintrag durch das Spannmittel 15 außerhalb der Mitte des Spannelements 4 und somit außerhalb der Mitte des Spannmechanismus. Die Mitte des Spannelements 4 ist der halbe Abstand Eₓ zwischen dem ersten Ende 18 und dem zweiten Ende 19 des Spannelements 4. Vorzugsweise ist das Spannmittel in einem Abstand < Eₓ/2 vom zweiten Ende 19 angeordnet. Erfindungsgemäß ist der Krafteintrag im Bereich von 20 bis 40 % von Eₓ /2, vorzugsweise 30% von Eₓ/2 entfernt zwischen dem zweiten Ende 19 und der Mitte des Spannelements 4 angeordnet. Aufgrund der Toleranzen der einzelnen Teile, in Verbindung mit den Eigenschaften (Empfindlichkeit in Bezug auf Zug- und Druckspannungen) der Schneidplatte 6 muss der Spannmechanismus hohen Ansprüchen genügen, um ein sicheres, wiederholbares Befestigen der Schneidplatte 6 im Werkzeugsitz 17 zu gewährleisten, ohne dass die Schneidplatte 6 beschädigt wird.

Der Abstand zwischen Wand 27 der Öffnung 26 und Mitte, dem Zentrum der Nase 5, bzw. Mulde 7 wird als Funktionsmaß Fₓ bezeichnet. Erfindungsgemäß wird dieses Maß so gewählt, dass bei maximal zulässigem Drehmoment M die Nase 5 bzw. deren Ringfläche 36 mit der Mulde 7 bzw. deren Ringfläche 31 einen vollständigen flächigen Formschluss bildet und aneinander anliegen. Dabei erstreckt sich der Anlagebereich über 360 Grad der beiden Ringflächen 31 und 36. Zwischen den Ringflächen 31 und 36 besteht im gespannten Zustand des Werkzeugsystems kein Abstand.

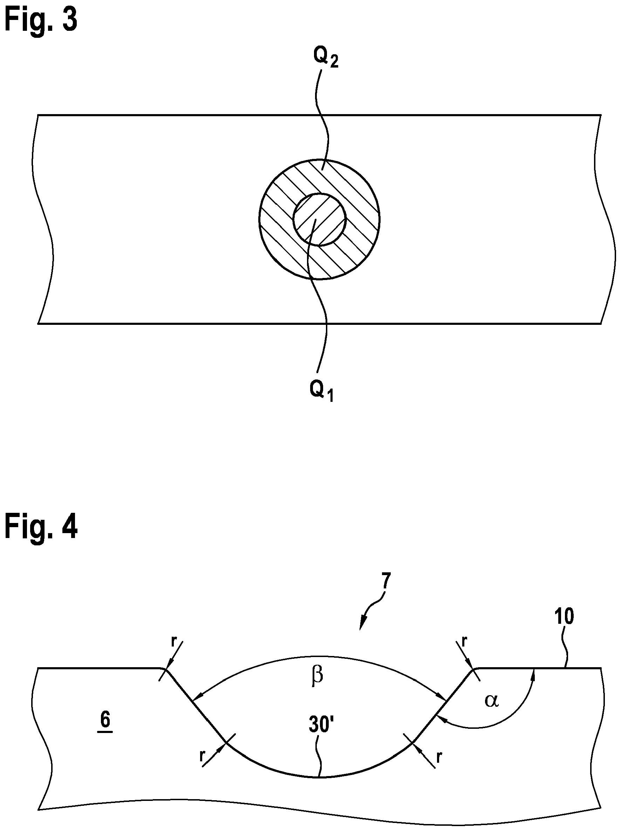

Ein Teil des Spannmechanismus ist die Mulde 7 der Schneidplatte 6, die in Figur 2 dargestellt ist. Die Mulde 7 der Schneidplatte 6 ist in der Mitte der Oberseite 10 oder Unterseite 11 der Schneidplatte 6 angeordnet. Nachfolgend wird eine Mulde 7 beschrieben, die an der Oberfläche 10 der Schneidplatte 6 angeordnet ist. Diese Beschreibung gilt entsprechend auch für eine Mulde 7, die an der Unterseite 11 einer Wendeschneidplatte 6 angeordnet ist. Die Mulde 7 ist als Vertiefung in die Schneidplatte 6 eingelassen und weist die Tiefe T auf. Die Mulde 7 kann einen ebenen Boden 30 aufweisen. Der Boden 30 kann parallel zur Oberseite 10 der Schneidplatte 6 angeordnet sein und geht über eine in einem Winkel α angeordnete Ringfläche 31 in die Oberfläche 10 über. Bei dem Winkel α zwischen Ringfläche 31 und Boden 30 handelt es sich um einen stumpfen Winkel α im Bereich von 135 bis 155 Grad, vorzugsweise weist dieser Winkel α einen Bereich von 140 bis 150 Grad auf. Dies ergibt einen Öffnungswinkel β der Mulde 7 im Bereich von 90 bis 130 Grad, vorzugsweise im Bereich von 100 bis 120 Grad. Die Querschnittsfläche Q1 des Bodens 30 der Mulde 7 ist kleiner als die Querschnittsfläche Q2 der Öffnung 32 der Mulde 7 (Figur 3). Am Boden 30 weist die Mulde einen Durchmesser m1 und an der Öffnung 32 einen Durchmesser m2 auf. Der Durchmesser m1 ist kleiner als der Durchmesser m2. Die Übergänge zwischen Boden 30 und Ringfläche 31 und zwischen Oberseite 10 und Ringfläche 31 können gerundet ausgebildet sein. Die Radien dieser Übergänge liegen in einem Bereich zwischen 0,2mm bis 2,5mm. Vorzugsweise betragen sie 0,6 mm, besonders vorzugsweise 2,0 mm. Die Mulde 7 besteht somit aus dem Boden 30 der Ringfläche 31, der Öffnung 32 sowie den gerundeten Übergängen.

In einem besonderen Ausführungsbeispiel kann der Boden 30 der Mulde 7 gebogen in Form eines Radius 30' oder eines polygenen Kurvenzuges, eines Splines ausgebildet sein (Figur 4). Von der Oberseite 10 der Schneidplatte 6 aus betrachtet, kann der durch den Radius 30' gebildete Boden 30 eine konkave Form aufweisen. Eine besonders vorteilhaft ausgebildete erfindungsgemäße Mulde 7 umfasst ausschließlich gerundete Übergänge r und weist somit keine scharfkantigen Ecken auf. Eine gerundete Mulde 7, ermöglicht einen hohen Krafteintrag ohne dass die Gefahr besteht, dass Risse und in deren Folge, Brüche in der Schneidplatte 6 entstehen können. An die Übergänge zwischen verschiedenen Flächenformen sind besondere Anforderungen gestellt. Diese sind prädestinierte Stellen an denen bevorzugt Risse entstehen können. Deshalb sind erfindungsgemäß diese Übergänge r bevorzugt gerundet ausgebildet.

In einer speziellen Ausführungsform (nicht dargestellt) kann zentral in der Mulde eine Erhebung angeordnet sein. Die Erhebung erstreckt sich vom Boden 30, 30' der Mulde in Richtung der Oberseite 10 und endet unterhalb dieser Oberseite.

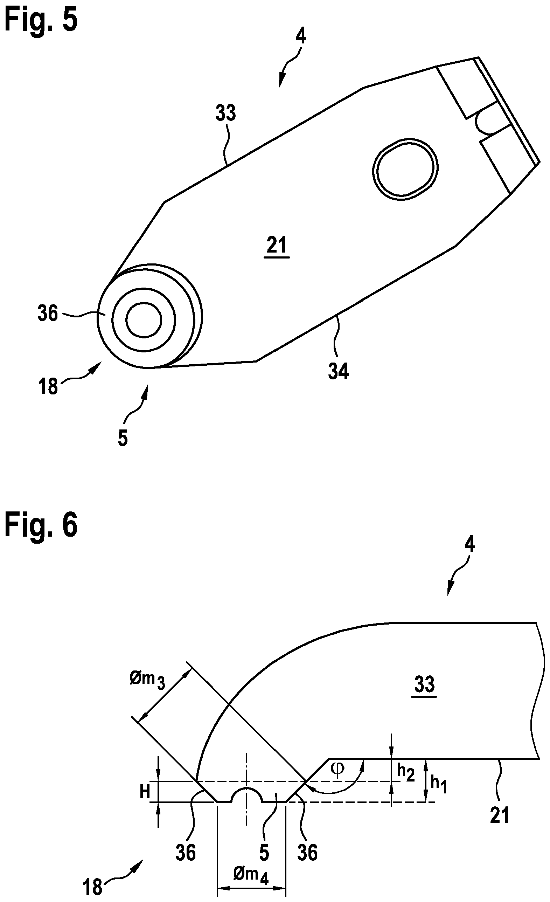

Figur 5 zeigt das Spannelement 4 von seiner Unterseite seiner breiten Flachseite 21. Mit der Unterseite 21 wird die Flachseite des Spannelements 4 bezeichnet, die im gespannten Zustand des Werkzeugsystems 1 der Schneidplatte 6 und dem Werkzeughalter 2 gegenüberliegt. Am ersten Ende 18 des Spannelements 4 ist eine Nase 5 in Form eines Vorsprungs angeordnet. Ausgehend von der Flachseite 21 erhebt sich der Vorsprung 5 weg von der Flachseite 21. Der Vorsprung weist eine Höhe h1 auf (Figur 6). In einem Abstand h2 von der Flachseite 21 geht der Vorsprung 5 in eine winklig angeordnete Ringfläche 36 über. Die Höhe an der die Ringfläche 36 an ihrem gesamten Umfang einen konstanten Betrag aufweist, wird mit H bezeichnet. Ausgehend von einem Durchmesser m3 erstreckt sich die Ringfläche 36 bis zu einem Durchmesser m4 dem Ende des Vorsprungs 5. Dabei ist m3 größer als m4. Der Abstand zwischen m3 und m4 ist die Höhe H des Vorsprungs 5. Die Ringfläche 36 ist in einem stumpfen Winkel ϕ zur Flachseite 34 angeordnet. Dieser Winkel ϕ ist vorzugsweise gleich wie der Winkel α zwischen der Ringfläche 31 und der Oberfläche 10 der Schneidplatte 6.

Die Höhe H des Vorsprungs 5 korreliert mit der Tiefe T der Mulde 7. Sie können die gleichen Werte umfassen, können aber auch voneinander abweichen. Beispielsweise kann H größer sein als T. Der Durchmesser m3 des Vorsprungs 5 korreliert mit dem Durchmesser m2 der Mulde 7. Die Durchmesser m3 und m2 können die gleichen Werte aufweisen, sie können aber auch voneinander abweichen. Beispielsweise kann m3 grösser sein als m2.

Bei einem erfindungsgemäßen Werkzeugsystem ist der Betrag der Winkel α und ϕ gleich, er liegt im Bereich von 135 bis 155 Grad, vorzugsweise liegen diese Winkel in einem Bereich von 140 bis 150 Grad. Dadurch entsteht ein präziser Formschluss auf der gesamten Ringfläche (360 Grad) zwischen Nase 5 des Spannelements 4 und der Mulde 7 der Schneidplatte 6. Bei gleichen Winkeln α und ϕ sind erfindungsgemäß folgende Konfigurationen möglich.
m3 > m2, dann gilt H > T, oder H = T, oder H < T
m3 = m2, dann gilt H = T, oder H < T
m3 > m1, dann gilt H <T, oder H = T, oder H > T

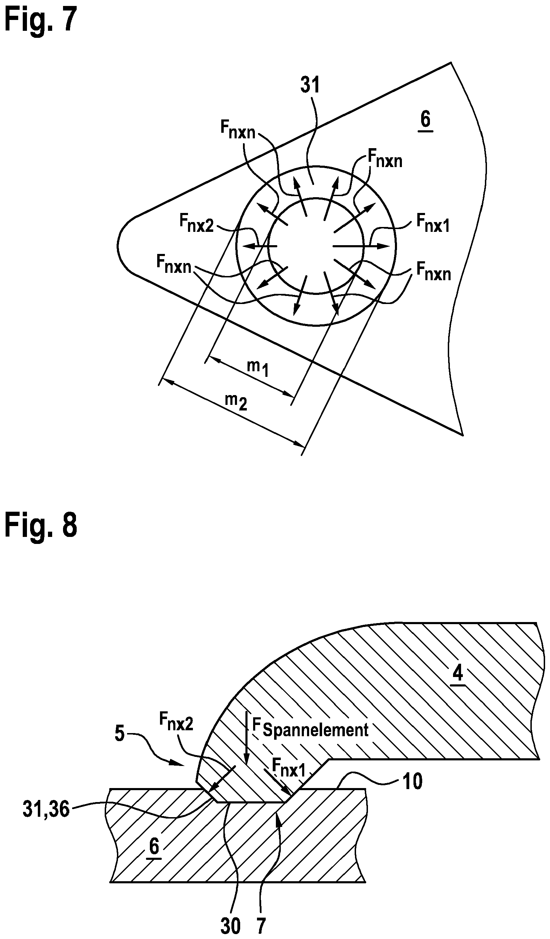

Bei einem Werkzeugsystem umfassend eine Schneidplatte 6 mit einer wie oben beschriebenen Mulde 7 und einem Spannelement 4 mit einem wie oben beschriebenem Vorsprung 5 in Verbindung mit dem wie oben beschriebenen Spannmechanismus, erfolgt die Krafteinwirkung auf der gesamten Ringfläche 31 der Mulde 7 (Figur 7 und 8). Die Kraft wirkt ringsum auf die Ringfläche 31. Es entsteht ein vollständig flächiger Formschluss zwischen der Ringfläche 36 der Nase 5 und der Ringfläche 31 der Mulde 7. Die Ringflächen 31 und 36 können eben ausgebildet sein. Dabei erfolgt die Krafteinleitung der Kraft F_{Spannelement} des Spannelements 4 über Kraftvektoren Fₙₓ. Diese Kraftvektoren sind gleichmäßig rings um die Ringfläche 31 angeordnet. Aufgrund der relativen Bewegung des Spannelements 4 gegenüber dem Werkzeughalter 2, verursacht beim Spannen durch das Gleiten der Fläche 20 des Spannelements 4 auf der Fläche 22 des Werkzeughalters 2 und der dadurch erzeugten Kraft F Rückzug ist der Betrag des Kraftvektoren Fₙₓ₁ höher als der Betrag der Kraftvektoren Fₙₓ₂. Dabei weist der Kraftvektor Fₙₓ₁ der parallel zur Rückzugsbewegung des Spannelements wirkt den höchsten Betrag auf. Ausgehend vom Betrag dieses Kraftvektors Fₙₓ₁ reduzieren sich die Beträge der Kraftvektoren, die auf die Ringfläche 31 wirken, kontinuierlich bis zum Kraftvektor Fₙₓ₂. Die Richtung, in der der Kraftvektor Fₙₓ₁ wirkt, ist entgegengesetzt der Richtung in der der Kraftvektor Fₙₓ₂ wirkt. Zwischen diesen beiden Kraftvektoren wirken n weitere Kraftvektoren auf die Ringfläche 31.

Die Größe, der Durchmesser, die Tiefe, der Winkel α der Mulde und die Kraft F_{Spannelement} können abhängig von der Größe der Schneidplatte und von den Prozessparametern, wie beispielsweise zu bearbeitendes Material, Vorschubgeschwindigkeit etc. gewählt werden.

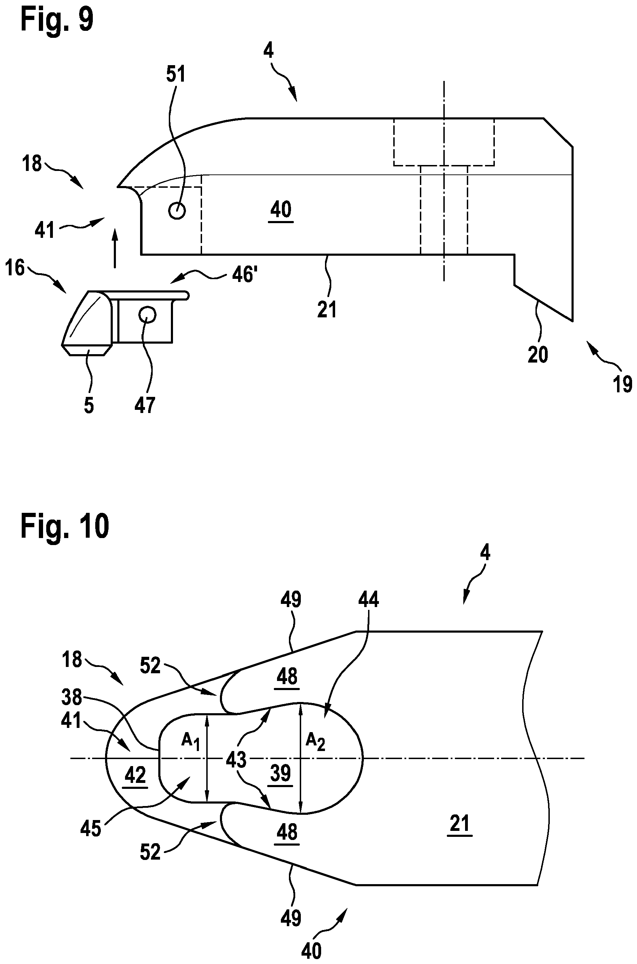

Figur 9 zeigt eine alternative Ausführungsform des Spannelements 4. Soweit dieses Spannelement identisch zu dem oben beschriebenen ist, gelten dieselben Bezugszeichen. Während das oben beschriebene Spannelement 4 einteilig ausgeführt ist, besteht das Spannelement 4 gemäß Figur 9 aus wenigstens zwei Teilen. Es umfasst einen Grundkörper 40, eine Druckplatte 16 und ein Befestigungsmittel 47. Am ersten Ende 18 des Spannelements 4 gemäß Figur 9 ist eine Druckplatte 16 beweglich angeordnet. Diese Druckplatte 16 kann aus einem verschleißfesten Material, wie beispielsweise Hartmetall oder Keramik hergestellt sein. Dadurch kann das erste Ende 18 des Spannelements 4 verschleißfester als dessen Grundkörper 40 ausgebildet sein. Die Beschädigungen, die durch die im Prozess entstehenden Späne an dem Spannelement 4 entstehen können, werden durch diese Erhöhung der Verschleißfestigkeit reduziert, vorzugsweise komplett vermieden. Zur Aufnahme der Druckplatte 16 in dem Spannelement 4 weist das Spannelement einen Aufnahmeraum 41 mit einer Anschlagfläche 42, einer Ausnehmung 39 und einer Führungsfläche 43 auf (Figur 10). Die Anschlagsfläche 42 kann eben ausgebildet und parallel zur Flachseite 21 angeordnete sein. In die Anschlagfläche 42 kann auch eine Ausnehmung 39 integriert sein. Der Bereich in dem die Führungsfläche 43 angeordnet ist, kann in Form einer Nut 44 ausgebildet sein und kann Engstellen umfassen. Der Abstand A1 der Mündung 45 der Nut 44 ist bevorzugt kleiner als der Abstand A2 innerhalb der Nut 44. Der Abstand A2 ist vom ersten Ende 18 weiter entfernt angeordnet als der Abstand A1. Aufgrund der Gestaltung der Nut 44 weist der Grundkörper 40 Vorsprünge in Form von Fingern 48 auf. Die Außenseiten 49 der Finger 48 können mit den Außenseiten des Grundkörpers 40 identisch sein. Sie können aber auch teilweise oder ganz in ihrer Form abweichen und in Richtung der Mittelachse des Grundkörpers gebogen angeordnet sein. In Figur 10 sind die Finger in ihrem Endbereich 52 in Richtung der Mittelachse gebogen angeordnet und weichen in diesem Bereich von der Außenform des Grundkörpers 40 von dem Spannelement 4 ab. Die Innenseiten 43 der Finger entsprechen den Führungsflächen der Nut 44 und bilden zusammen mit einem Bereich der Anschlagfläche 42 und der Ausnehmung 39 den Aufnahmeraum der Nut 44. Durch die nach innen angeordneten Finger 48 entsteht ein so genannter

Hinterschnitt. Eine Druckplatte 16, die eine mit der Nut 44 korrelierende Feder 46 aufweist, die in die Nut 44 eingreift, kann aufgrund des Hinterschnitts, der Verengung, im Bereich der Mündung 45 nicht in Richtung des ersten Endes 18 entweichen. Ein zusätzliches Sicherungsmittel 38 bildet der Absatz zwischen Ausnehmung 39 und Anschlagfläche 42. Aufgrund dieser Ausnehmung 39 ist die Höhe der Nut, gemessen von der Flachseite 21 des Grundkörpers 40 des Spannelements 4 bis zum Boden der Ausnehmung 39 größer als der Abstand gemessen von der Flachseite 21 des Grundkörpers 40 des Spannelements 4 bis zur Anschlagfläche 42. Erstreckt sich ein Bereich der Feder 46 in die Ausnehmung 39 dann bildet der Übergang der Ausnehmung 39 zur Anschlagfläche 42 das Sicherungsmittel 38, welches zusätzlich die horizontale Bewegungsfreiheit der Grundplatte 16 einschränkt. Aufgrund der Gestaltung der Nut 44 des Spannelements 4 und der Feder 46 der Druckplatte 16 wird die Druckplatte 16 in horizontaler Bewegungsrichtung des Spannelements 4 verliersicher gehalten. Erfindungsgemäß weist die Kupplung zwischen Druckplatte 16 und dem Spannelement 4 Spiel auf. Das Spiel beträgt 0,1 bis 0,5 mm, vorzugsweise 0,3 mm in axialer Richtung und maximal 5 Grad, vorzugsweise 2 Grad in radialer Richtung. Die axiale Richtung ist dabei parallel zur Flachseite 21, die radiale Richtung ist rings um die Öffnung 41 angeordnet. Durch dieses Spiel (axial und radial) entsteht eine zusätzliche Möglichkeit, die aufgrund der Herstellung der einzelnen Teile eines Werkzeugsystems bestehenden Toleranzen auszugleichen. Die Druckplatte 16 wird mit einem Befestigungsmittel 47, beispielsweise einem Zylinderstift, beweglich in einer Öffnung 51 im Grundkörper 40 des Spannelements 4 gehalten.

Für die an der Druckplatte 16 angeordnete Nase 5, deren Form mit der Mulde 7 einer Schneidplatte 6 korreliert, gilt das oben beschriebene entsprechend. Die durch das Spannmittel 15 erzeugte Kraft wirkt über die Ringfläche 36 der Nase 5 der Druckplatte 16 auf die gesamten Ringfläche 31 der Mulde 7 einer Schneidplatte 6.

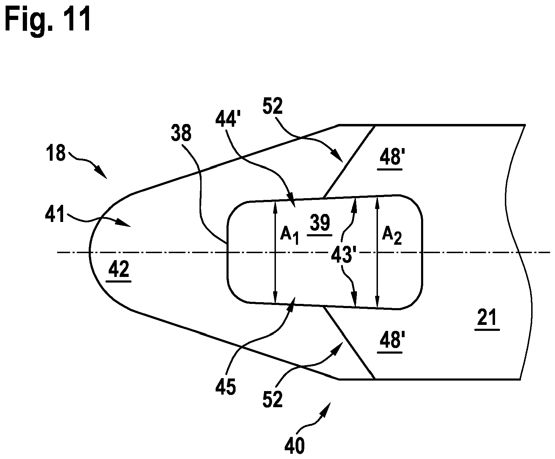

Figur 11 zeigt ein weiteres Ausführungsbeispiel des ersten Endes 18 des Spannelements 4. Sofern es dieselben Merkmale wie das Spannelement 4 gemäß Figur 10 betrifft, gelten die entsprechenden Bezugszeichen und die bisherige Beschreibung. Ein Spannelement 4 gemäß Figur 10 weist an seinem ersten Ende 18 eine modifizierte Nut 44' auf. Die Vorsprünge 48' sind geradlinig ausgebildet und nicht nach innen gebogen, wie beim Ausführungsbeispiel gemäß Figur 10. Die Führungsflächen 43' der Innenseiten der Nut 44' sind parallel zueinander angeordnet. Dadurch entsteht eine Nut 44' deren Abstände A1 und A2 gleich groß sind. Die Breite der Nut 44' ist im Bereich ihrer Mündung 45 gleich groß wie in einem Bereich, der von der Mündung in einem Abstand angeordnet ist. Dadurch weist diese Nut 44' keinen Hinterschnitt auf. Die horizontale Beweglichkeit einer Druckplatte 16, die eine zur Nut 44' kongruente Feder 46 aufweist, wird ausschließlich durch das Sicherungsmittel 38 begrenzt. Die Feder 46 greift in die Ausnehmung 39, die in Form einer Tasche ausgebildet ist, ein. Die Druckplatte 16 wird durch ein Befestigungsmittel 17 beweglich im Spannelement 4 gehalten. Figur 11 zeigt eine vereinfachte Form des ersten Endes 18 eines Spannelements 4, welches die Anforderungen an ein erfindungsgemäßes Werkzeugsystem erfüllen.

Die Erfindung beschreibt ein Werkzeugsystem 1 mit einem Werkzeughalter 2, der einen Plattensitz 17 zur Aufnahme eine Schneidplatte 6 mit einer Mulde 7, mit einem Spannelement 4 das eine Öffnung 26 zur Aufnahme eines Spannmittels 15 und einen Vorsprung 5 aufweist, mit einem Mechanismus (Funktionsmaß Fₓ) der die lineare Beweglichkeit des Spannelements 4 begrenzt. Dadurch ist ein verliersicheres, wiederholbares Spannen einer Wendeschneidplatte 6 gewährleistet.

Dadurch, dass im gespannten Zustand der Schneidplatte der Führungsabschnitt 25 der Schraube 15 an dem Anschlag 27 der Wand der Öffnung 26 kraftschlüssig anliegt, ist eine automatische Begrenzung der Spannkraft der Schneidplatte 6 in den Plattensitz im Werkzeughalter 2 erreicht.

## Patentansprüche

1. Werkzeugsystem (1) mit einer Schneidplatte (6) und mit einem Werkzeughalter (2), der einen Plattensitz (17) zur Aufnahme der Schneidplatte (6) mit einer Mulde (7) und entfernt von diesem Plattensitz (17) eine zur an den Plattensitz (17) angrenzende Oberfläche (53) des Werkzeughalters (2) in einem stumpfen Winkel (γ) geneigte Fläche (22) aufweist, mit einem Spannelement (4), das eine Öffnung (26) mit einem Anschlag (27), in der eine Spannschraube (15) mit einem Führungsabschnitt (25) aufgenommen ist, eine Fläche (20) und einen Vorsprung (5) aufweist, wobei die Nase (5) des Spannelements (4) eine Ringfläche (36) und die Mulde (7) der Schneidplatte (6) eine Ringfläche (31) aufweist, wobei im gespannten Zustand der Schneidplatte (6) die Ringfläche (36) des Spannelements (4) und die Ringfläche (31) der Schneidplatte (6) aneinander formschlüssig anliegen und beim Befestigungsvorgang des Spannelements (4) an dem Werkzeughalter (2), d.h. beim Erzeugen eines Drehmoments, beim Drehen der Spannschraube (15) die Fläche (20) des Spannelements (4) auf der Fläche (22) des Werkzeughalters (2) gleitet wodurch sich das Spannelement (4) relativ zu dem Werkzeughalter (2) bewegt und die Schneidplatte (6) in den Plattensitz (17) zieht und spannt, **dadurch gekennzeichnet, dass** das Werkzeugsystem ein Funktionsmaß Fₓ zwischen dem Zentrum der Mulde (7) und dem Anschlag (27) der Öffnung (26) enthält, wobei der Betrag dieses Funktionsmaßes Fₓ so gewählt ist, dass bei maximal zulässigem Drehmoment M der Spannschraube (15) die Ringfläche (36) der Nase (5) mit der Ringfläche (31) der Mulde (7) einen vollständigen flächigen Formschluss bildet und im gespannten Zustand der Schneidplatte (6) der Führungsabschnitt (25) der Spannschraube (15) an dem Anschlag (27) der Wand der Öffnung (26) kraftschlüssig anliegt.

2. Werkzeugsystem nach Anspruch 1, **dadurch gekennzeichnet, dass** der Bereich in dem die Ringfläche (31) und die Ringfläche (36) aneinander anliegen 360 Grad umfasst.

3. Werkzeugsystem nach Anspruch 1 oder 2, **dadurch gekennzeichnet, dass** die Ringflächen (31, 36) eben ausgebildet sind.

4. Werkzeugsystem nach einem der Ansprüche 1 bis 3, **dadurch gekennzeichnet, dass** das Spannelement (4) ein erstes Ende (18) und ein zweites Ende (19) umfasst, wobei die Nase (5) im Bereich des ersten Endes und die Fläche (20) im Bereich des zweiten Endes in einem Abstand Eₓ zueinander angeordnet sind.

5. Werkzeugsystem nach Anspruch 4, **dadurch gekennzeichnet, dass** die Öffnung (26) des Spannelements (4) in einem Abstand < Eₓ/2 vom zweiten Ende (19) angeordnet ist.

6. Werkzeugsystem nach Anspruch 4 oder 5, **dadurch gekennzeichnet, dass** die Öffnung (26) des Spannelements (4) in einem Abstand von 20 bis 40%, vorzugsweise 30% von Eₓ/2, vom zweiten Ende (19) angeordnet ist.

7. Werkzeugsystem nach einem der vorhergehenden Ansprüche, **dadurch gekennzeichnet, dass** im gespannten Zustand, die Kraft, die durch die Spannschraube (15) erzeugt wird, ringsum auf die Ringfläche (31) der Mulde (7) wirkt.

8. Werkzeugsystem nach einem der Ansprüche 4 bis 7, **dadurch gekennzeichnet, dass** der Kraftvektor (Fₙₓ₁), der in Richtung des zweiten Endes (19) des Spannelements (4) wirkt, einen größeren Betrag aufweist, als der Kraftvektor (Fₙₓ₂) der in Richtung des ersten Endes (18) des Spannelements (4) wirkt.

9. Werkzeugsystem nach einem der vorhergehenden Ansprüche, **dadurch gekennzeichnet, dass** das Spannelement (4) eine Druckplatte (16) aufweist, an der der Vorsprung (5) ausgebildet ist.

10. Werkzeugsystem nach Anspruch 9, **dadurch gekennzeichnet, dass** die Druckplatte (16) aus einen verschleißfesten Werkstoff, vorzugsweise Hartmetall oder Keramik gebildet ist.

11. Werkzeugsystem nach Anspruch 9 oder 10, **dadurch gekennzeichnet, dass** das Spannelement (4) eine Nut (44) aufweist, in der die Druckplatte (16) mit einem Spiel in radialer und linearer Richtung gehalten ist.

12. Werkzeugsystem nach Anspruch 11, **dadurch gekennzeichnet, dass** das Spiel zwischen Druckplatte (16) und dem Spannelement (4) in linearer Richtung 0,1 bis 0,5 mm, vorzugsweise 0,3 mm beträgt und/oder das Spiel zwischen Druckplatte (16) und dem Spannelement (4) in radialer Richtung maximal 5, vorzugsweise 2 Grad beträgt.

## Claims

1. Tool system (1) comprising a cutting plate (6) and comprising a tool holder (2) which has a plate seat (17) for receiving the cutting plate (6) having a trough (7), and, at a distance from this plate seat (17), has a surface (22) which is inclined at an obtuse angle (y) with respect to the surface (53) of the tool holder (2) that is adjacent to the insert seat (17), comprising a clamping element (4) which has an opening (26) with a stop (27), in which opening a clamping screw (15) having a guide portion (25) is received, a surface (20), and a projection (5), the lug (5) of the clamping element (4) having an annular surface (36) and the trough (7) of the cutting plate (6) having an annular surface (31), the annular surface (36) of the clamping element (4) and the annular surface (31) of the cutting plate (6) abutting one another in an interlocking manner when the cutting plate (6) is clamped, and, during the process of fastening the clamping element (4) to the tool holder (2), i.e. while producing a torque, during rotation of the clamping screw (15) the surface (20) of the clamping element (4) slides on the surface (22) of the tool holder (2), as a result of which the clamping element (4) moves relative to the tool holder (2) and pulls the cutting plate (6) into the plate seat (17) and clamps it therein, **characterized in that** the tool system has a functional dimension Fₓ between the center of the trough (7) and the stop (27) of the opening (26), the value of this functional dimension Fₓ being selected such that at the maximum permissible torque M of the clamping screw (15), the annular surface (36) of the lug (5) forms a completely planar interlocking connection to the annular surface (31) of the trough (7) and, when the cutting plate (6) is clamped, the guide portion (25) of the clamping screw (15) abuts the stop (27) of the wall of the opening (26) in a force-fitting manner.

2. Tool system according to claim 1, **characterized in that** the region in which the annular surface (31) and the annular surface (36) abut one another covers 360 degrees.

3. Tool system according to either claim 1 or claim 2, **characterized in that** the annular surfaces (31, 36) are planar.

4. Tool system according to any of claims 1 to 3, **characterized in that** the clamping element (4) comprises a first end (18) and a second end (19), the lug (5) and the surface (20) being arranged in the region of the first end and in the region of the second end, respectively, at a distance Eₓ from one another.

5. Tool system according to claim 4, **characterized in that** the opening (26) of the clamping element (4) is arranged at a distance <Eₓ/2 from the second end (19).

6. Tool system according to either claim 4 or claim 5, **characterized in that** the opening (26) of the clamping element (4) is arranged at a distance from the second end (19) that is 20 to 40%, preferably 30% of Eₓ/2.

7. Tool system according to any of the preceding claims, **characterized in that** in the clamped state, the force generated by the clamping screw (15) acts on the entire circumference of the annular surface (31) of the trough (7).

8. Tool system according to any of claims 4 to 7, **characterized in that** the force vector (Fₙₓ₁) acting in the direction of the second end (19) of the clamping element (4) is greater than the force vector (Fₙₓ₂) acting in the direction of the first end (18) of the clamping element (4).

9. Tool system according to any of the preceding claims, **characterized in that** the clamping element (4) has a pressure plate (16) on which the projection (5) is formed.

10. Tool system according to claim 9, **characterized in that** the pressure plate (16) is made of a wear-resistant material, preferably hard metal or ceramic.

11. Tool system according to either claim 9 or claim 10, **characterized in that** the clamping element (4) has a groove (44) in which the pressure plate (16) is held with a clearance in the radial and linear directions.

12. Tool system according to claim 11, **characterized in that** the clearance between the pressure plate (16) and the clamping element (4) in the linear direction is 0.1 to 0.5 mm, preferably 0.3 mm, and/or the clearance between the pressure plate (16) and the clamping element (4) in the radial direction is a maximum of 5 degrees, preferably 2 degrees.

## Revendications

1. Système d'outil (1) comportant une plaquette de coupe (6) et un porte-outil (2), lequel porte-outil présente un logement de plaquette (17) destiné à recevoir la plaquette de coupe (6) présentant un creux (7) et, à distance dudit logement de plaquette (17), une surface inclinée (22) selon un angle obtus (y) par rapport à la surface (53) du porte-outil (2) adjacente au logement de plaquette (17), comportant un élément de serrage (4) qui présente une ouverture (26) ayant une butée (27), ouverture dans laquelle une vis de serrage (15) est reçue avec une section de guidage (25), comportant une surface (20) et une saillie (5), le nez (5) de l'élément de serrage (4) présentant une surface annulaire (36) et le creux (7) de la plaquette de coupe (6) présentant une surface annulaire (31), la surface annulaire (36) de l'élément de serrage (4) et la surface annulaire (31) de la plaquette de coupe (6) reposant l'une sur l'autre par complémentarité de forme à l'état tendu de la plaquette de coupe (6) et, pendant le processus de fixation de l'élément de serrage (4) sur le porte-outil (2), c'est-à-dire lors de la génération d'un couple, lors de la rotation de la vis de serrage (15), la surface (20) de l'élément de serrage (4) glisse sur la surface (22) du porte-outil (2), l'élément de serrage (4) se déplaçant ainsi par rapport au porte-outil (2) et tirant, serrant la plaquette de coupe (6) dans le logement de plaquette (17), **caractérisé en ce que** le système d'outil comporte une dimension fonctionnelle Fₓ entre le centre du creux (7) et la butée (27) de l'ouverture (26), la valeur de ladite dimension fonctionnelle Fₓ étant choisie de sorte que, pour un couple maximal admissible M de la vis de serrage (15), la surface annulaire (36) du nez (5) forme une complémentarité de forme plate complète avec la surface annulaire (31) du creux (7) et, à l'état tendu de la plaquette de coupe (6), la partie de guidage (25) de la vis de serrage (15) repose par complémentarité de force sur la butée (27) de la paroi de l'ouverture (26).

2. Système d'outil selon la revendication 1, **caractérisé en ce que** la zone dans laquelle les surfaces annulaires (31, 36) reposent l'une sur l'autre couvre 360 degrés.

3. Système d'outil selon la revendication 1 ou 2, **caractérisé en ce que** les surfaces annulaires (31, 36) sont conçues de manière plane.

4. Système d'outil selon l'une des revendications 1 à 3, **caractérisé en ce que** l'élément de serrage (4) comprend une première extrémité (18) et une seconde extrémité (19), le nez (5) dans la zone de la première extrémité et la surface (20) dans la zone de la seconde extrémité étant disposés l'un par rapport à l'autre à une distance Eₓ.

5. Système d'outil selon la revendication 4, **caractérisé en ce que** l'ouverture (26) de l'élément de serrage (4) est disposée à une distance < Eₓ/2 par rapport à la seconde extrémité (19).

6. Système d'outil selon la revendication 4 ou 5, **caractérisé en ce que** l'ouverture (26) de l'élément de serrage (4) est disposée à une distance de 20 à 40 %, de préférence de 30 % d'Eₓ/2, par rapport à la seconde extrémité (19).

7. Système d'outil selon l'une des revendications précédentes, **caractérisé en ce que**, à l'état serré, la force générée par la vis de serrage (15) agit tout autour de la surface annulaire (31) du creux (7).

8. Système d'outil selon l'une des revendications 4 à 7, **caractérisé en ce que** le vecteur force (Fₙₓ₁), qui agit en direction de la seconde extrémité (19) de l'élément de serrage (4), présente une valeur plus importante que le vecteur force (Fₙₓ₂) qui agit en direction de la première extrémité (18) de l'élément de serrage (4).

9. Système d'outil selon l'une des revendications précédentes, **caractérisé en ce que** l'élément de serrage (4) présente une plaquette de pression (16) sur laquelle est formée la saillie (5).

10. Système d'outil selon la revendication 9, **caractérisé en ce que** la plaquette de pression (16) est formée d'un matériau résistant à l'usure, de préférence de métal dur ou de céramique.

11. Système d'outil selon la revendication 9 ou 10, **caractérisé en ce que** l'élément de serrage (4) présente une rainure (44) dans laquelle la plaquette de pression (16) est maintenue avec un jeu dans les directions radiale et linéaire.

12. Système d'outil selon la revendication 11, **caractérisé en ce que** le jeu entre la plaquette de pression (16) et l'élément de serrage (4) dans le sens linéaire est de 0,1 à 0,5 mm, de préférence de 0,3 mm et/ou le jeu entre la plaquette de pression (16) et l'élément de serrage (4) dans le sens radial est au maximum de 5, de préférence de 2 degrés.
